# EUROPEAN PATENT APPLICATION

(11) **EP 2 455 749 A1**
(43) Date of publication of application: **23.05.2012**
(21) Application number: 10799646.4
(22) Date of filing: 16.07.2010
(51) Int. Cl.: G01N 27/416, G01N 27/30

(54) **METHOD FOR ELECTRIC MEASUREMENT OF PEROXIDE USING CNT SENSOR**

(30) Priority: 17.07.2009 JP 2009169126
(71) Applicant: National University Corporation Hokkaido University, Sapporo-shi, Hokkaido 060-0808 (JP); Health Sciences University Of Hokkaido, Hokkaido 061-0293 (JP)
(72) Inventor: CHIBA, Hitoshi, Sapporo-shi, Hokkaido 060-0808 (JP); TAKEDA, Seiji, Sapporo-shi, Hokkaido 060-0808 (JP); ISHII, Atsushi, Sapporo-shi, Hokkaido 060-0808 (JP); NAKAMURA, Motonori, Sapporo-shi, Hokkaido 060-0808 (JP); MUKASA, Koichi, Sapporo-shi, Hokkaido 060-0808 (JP); HUI, Shuping, Hokkaido 061-0293 (JP); KUROSAWA, Takao, Hokkaido 061-0293 (JP)
(74) Representative: Epping - Hermann - Fischer
(86) International application number: PCT/JP2010/004624
(87) International publication number: WO 2011/007582

(57) **Abstract**

Disclosed is a method for measuring the concentration of a peroxide using a CNT sensor. The CNT sensor comprises a working electrode that is arranged on an insulating substrate, a monolayered carbon nano-tube that is contacted with the working electrode, a counter electrode, and a reference electrode. A sample is provided on the monolayered carbon nano-tube, and a potential difference is made between the working electrode and the counter electrode. In this manner, the concentration of the peroxide in the sample can be measured. The measurement method can be applied to clinical tests or the like.

## Description

### Technical Field

The present invention relates to a method for electrically measuring a peroxide using a CNT sensor.

### Background Art

Biochemical assays using hydrogen peroxide-peroxidase systems constitute one class of basic techniques of clinical tests. For example, in the assays for blood glucose, neutral fats, low-density lipoprotein (LDL) cholesterol, high-density lipoprotein (HDL) cholesterol, fatty acids, uric acid (causative agent for gout), creatinine (indicator for renal function) and the like, hydrogen peroxide is produced by a reaction using an enzyme specific to the object of measurement in a first step, which varies with the object of measurement; and the hydrogen peroxide produced in the first step is measured by a spectroscopic method of using a peroxidase reaction in a second step which is common for the objects of measurement. Furthermore, even in immunoassays, a hydrogen peroxide-peroxidase system is used as an index for evaluating the product of an antigen-antibody reaction. Therefore, quantitative determination of hydrogen peroxide is an important process in these assays.

On the other hand, electrochemical methods for measuring hydrogen peroxide have also been reported. For example, quantitative determination of hydrogen peroxide is carried out such that when a gold or platinum electrode is used as a working electrode, while an Ag/AgCl electrode or the like is used as a reference electrode, and a constant voltage is applied to the working electrode or the voltage is scanned, the redox current flowing through the working electrode is measured.

Lipid peroxides in the living body are expected to be clinically useful as oxidative stress markers (see Non-Patent Literatures 1 and 2). Accordingly, there is a demand for a quantitative determination technique for lipid peroxides. As a conventional method for measuring lipid peroxides, a chemiluminescence-HPLC method is known. However, the chemiluminescence-HPLC method requires large-sized apparatuses. Furthermore, as another method for measuring lipid peroxides, a thiobarbituric acid method is also known. However, the thiobarbituric acid method is a non-specific method which mainly measures aldehydes other than lipid peroxides. Further, the thiobarbituric acid method requires an intricate procedure and spectroscopic analyzers.

Recently, an electrochemical test device called a CNT sensor has been suggested. CNT sensors have been subjected to the promotion for a further increase in sensitivity and further miniaturization of the device. CNT sensors of various forms have been suggested, but a sensor of one general form includes a working electrode having a structure in which carbon nanotubes (CNT) or graphite sheets of various shapes are superposed so as to be in contact with a metal electrode (see Patent Literatures 1 to 3).

### Citation List

### Patent Literature

PTL 1
   International PCT Patent Application No. WO 2006/103872
PTL 2
   International PCT Patent Application No. WO 2007/114140
PTL 3
   Japanese Patent Application Laid-Open No. 2008-258594

### Non-Patent Literature

NPTL 1
   Hui SP, Murai T, Yoshimura T, Chiba H, Nagasaka H and Kurosawa T, "Improved HPLC Assay for Lipid Peroxides in Human Plasma Using the Internal Standard of Hydroperoxide", Lipids, Vol.40, No.5, pp.515-522.
NPTL 2
   Hui SP, Chiba H, Sakurai T, Asakawa C, Nagasaka H, Murai T, Ide H and Kurosawa T, "An improved HPLC assay for phosphatidylcholine hydroperoxides (PCOOH) in human plasma with synthetic PCOOH as internal standard", Journal of Chromatography B, Vol.857, pp.158-163.

### Summary of Invention

### Technical Problem

It is an object of the present invention to enable convenient measurement of the concentration of a peroxide, and to provide a technique of the measurement. Furthermore, it is another object of the present invention to apply the measurement technique to clinical tests.

Firstly, the present invention provides an electrochemical measurement technique which uses a CNT sensor that detects the concentration of a peroxide as an electrical signal, instead of spectroscopic measurement techniques using peroxidase systems, which are conventional techniques for measuring hydrogen peroxide. The conventional spectroscopic measurement techniques require a light source and a detector. On the other hand, the electrochemical measurement technique using a CNT sensor realizes simplification and size reduction of the measurement apparatus, and contributes significantly to clinical tests such as Point-of-Care Testings (POCT).

Secondly, the present invention provides a technique that measures lipid peroxides among other peroxides. Since lipid peroxides have been conventionally measured by a chemiluminescence-HPLC method which requires relatively a large-sized apparatus, lipid peroxides have been considered not very suitable as an object of measurement for POCT. According to the present invention, the concentrations of a variety of types of lipid peroxides can be measured. Therefore, the present invention contributes significantly to clinical tests.

### Solution to Problem

A first aspect of the present invention relates to a method for measuring a peroxide as described below.
[1] A method for measuring a peroxide in a sample, the method including a step of providing a CNT sensor which includes a working electrode disposed on an insulating substrate, single-walled carbon nanotubes that are in contact with the working electrode and have a hydroxyl group or a carboxyl group on the surface, a counter electrode, and a reference electrode; a step of supplying a sample which is a solution containing a peroxide, to the CNT sensor such that the sample is brought into contact with the single-walled carbon nanotubes; and a step of providing a potential difference between the working electrode and the counter electrode.
[2] The method as set forth in item [1], wherein the single-walled carbon nanotubes are carbon nanotubes that have been treated by being dispersed in a solution containing an acid and hydrogen peroxide.
[3] The method as set forth in item [1] or [2], wherein the peroxide is hydrogen peroxide that has been produced by allowing a biological component to react using an enzyme specific to the biological component.
[4] The method as set forth in item [3], wherein the biological component is selected from the group consisting of glucose, total cholesterol, free cholesterol, triglycerides, phospholipids, LDL cholesterol, HDL cholesterol, free fatty acids, uric acid, creatinine, creatine, bilirubin, lactic acid, pyruvic acid, creatinine, cholines, and enzymes.
[5] The method as set forth in item [1] or [2], wherein the peroxide is a lipid peroxide.
[6] The method as set forth in item [5], wherein the lipid peroxide is a cholesterol ester peroxide, a cholesterol peroxide, a phospholipid peroxide, a triglyceride peroxide, or a glycolipid peroxide.

A second aspect of the present invention relates to a sensor as described below.
[7] A sensor for peroxide measurement, including a working electrode disposed on an insulating substrate; single-walled carbon nanotubes that are in contact with the working electrode and have a hydroxyl group or a carboxyl group on the surface; a counter electrode; and a reference electrode, wherein a sample solution containing the peroxide to be measured is supplied so as to be in contact with the single-walled carbon nanotubes.
[8] The sensor for peroxide measurement according to item [7], wherein the single-walled carbon nanotubes are carbon nanotubes which have been treated by being dispersed in a solution containing an acid and hydrogen peroxide.

### Advantageous Effects of Invention

According to the present invention, a peroxide can be measured rapidly and with high sensitivity. For example, according to the present invention, a peroxide in a wide range of concentrations can be measured rapidly and with high sensitivity. Therefore, those objects of clinical tests that have been hitherto measured by a spectroscopic method using a peroxidase reaction, can be measured by the method of the present invention.

Furthermore, according to the present invention, peroxides in the living body (for example, peroxides of proteins, nucleic acids and lipids, particularly lipid peroxides) can be measured. Lipid peroxides are known to serve as an indicator for lifestyle-related diseases. Therefore, a method for measuring a lipid peroxide contributes to the diagnosis of lifestyle-related diseases, and to the development of methods for treating lifestyle-related diseases.

### Brief Description of Drawings

FIG.1A is a planar view showing an exemplary CNT sensor used in the measurement method of the present invention.
FIG.1B is a cross-sectional diagram showing an exemplary CNT sensor used in the measurement method of the present invention.
FIG.2 is a perspective view showing the structure of a CNT sensor used in Examples.
FIG.3 is a graph showing the results for the measurement of hydrogen peroxide by an electrochemical measurement using a CNT sensor (closed square, solid line), and the results for the measurement of hydrogen peroxide by a spectroscopic measurement (open circle, broken line).
FIG.4 is a graph showing the influence of the presence of ascorbic acid on the electrochemical measurement of hydrogen peroxide.
FIG.5 is a graph showing the influence of the presence of bilirubin on the electrochemical measurement of hydrogen peroxide.
FIG.6 is a graph showing the influence of the presence of uric acid on the electrochemical measurement of hydrogen peroxide.
FIG.7 is a graph showing the influence of the presence of human serum albumin on the electrochemical measurement of hydrogen peroxide.
FIG.8 is a graph showing the influence of the presence of serum that has been filtered (closed square, solid line) or serum that has not been filtered (open circle, broken line), on the electrochemical measurement of hydrogen peroxide.
FIG.9 is a graph showing the measurement results obtained by an electrochemical measurement of lactic acid.
FIG.10 is a graph showing the measurement results obtained by an electrochemical measurement of a cholesteryl ester and the peroxide of a cholesteryl ester.
FIG.11 is a graph showing the results obtained by measuring oxidized LDL by a conjugated diene method (closed circle), a TBARS method (closed triangle), and the method of the present invention (closed square).
FIG.12 is a graph showing the results obtained by measuring oxidized LDL (solid line) and pre-oxidized LDL (broken line) by the method of the present invention.

### Description of Embodiments

### 1. CNT sensor

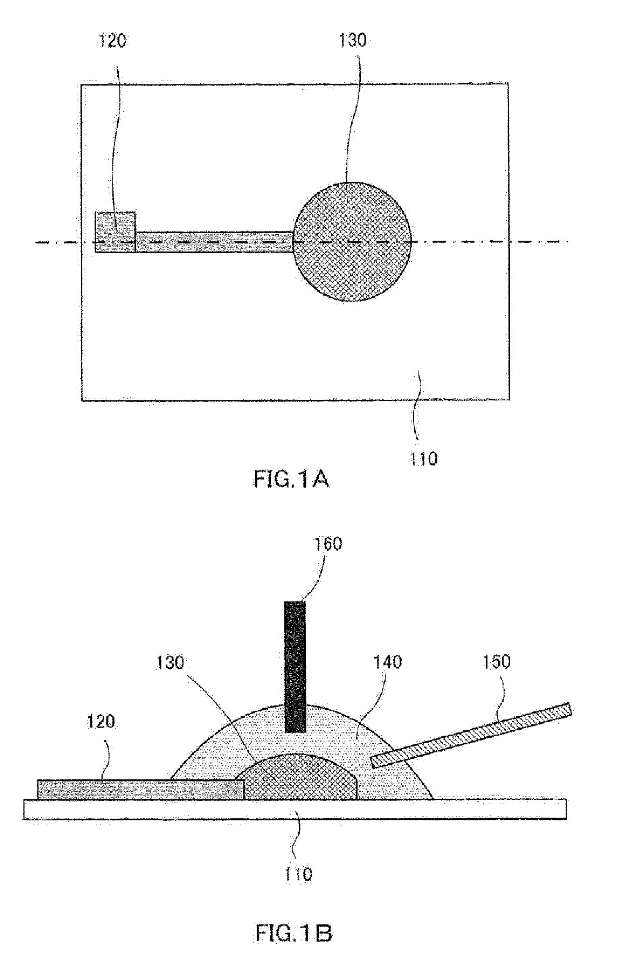

The CNT sensor of the present invention includes an insulating substrate, a working electrode that is disposed on the insulating substrate, carbon nanotubes that are in contact with the working electrode, a counter electrode, and a reference electrode. FIG.1A and FIG.1B present examples of the CNT sensor. As shown in FIG.1A, working electrode 120, and carbon nanotubes 130 that are in contact with working electrode 120, are fixed onto insulating substrate 110. Carbon nanotubes 130 fixed onto insulating substrate 110 are immersed in sample solution 140, which is a test sample. Furthermore, counter electrode 150 and reference electrode 160 are disposed so as to be in contact with sample solution 140 (see FIG.1B). Counter electrode 150 and reference electrode 160 need not be fixed to insulating substrate 110, and it is preferable that the electrodes be disposed to be demountable from insulating substrate 110.

The counter electrode is preferably disposed not to be in contact with the carbon nanotubes. If the counter electrode is in contact with the carbon nanotubes, the current between the working electrode and the counter electrode increases, and the difference of the redox current which is dependent on the dose of the peroxide cannot be verified. When the amount of the carbon nanotubes to be fixed is adjusted, the counter electrode may be disposed to be in contact with the carbon nanotubes; however, usually, the counter electrode is disposed not to be in contact with the carbon nanotube.

The material of the insulating substrate may be an inorganic material or an organic material. For example, the insulating substrate is a glass substrate. The material of the working electrode and the counter electrode is usually a metal, and gold, platinum, titanium and the like are preferred. The working electrode is preferably formed as a film on the insulating substrate and fixed thereto. The electrode formed as a film on the insulating substrate may be a bilayer electrode. For example, chromium having high adhesiveness may be used as a ground layer, and highly conductive gold or platinum may be laminated thereon. The counter electrode is, for example, a needle-shaped metal. The reference electrode is not particularly limited, but for example, an Ag/AgCl electrode may be used.

The carbon nanotubes fixed to the insulating substrate are preferably single-walled carbon nanotubes. Furthermore, it is preferable that the carbon nanotubes have been treated by being dispersed in a solution containing an acid and hydrogen peroxide. It can be conceived that the surface of a carbon nanotube that has been subjected to the treatment has a hydroxyl group and/or a carboxyl group introduced thereto. Therefore, the treatment is also effective for the fixing of the carbon nanotubes to the insulating substrate.

In general, a surfactant is incorporated in order to obtain a dispersion liquid of the carbon nanotubes. However, it is preferable not to use surfactants in order to reduce the influence on the performance of the sensor.

### [Production Example for CNT sensor]

First, a working electrode is formed on a glass substrate. For example, the surface of the glass substrate in the areas other than the area where the electrode is to be formed, is masked with a resist film. Then, a film of a metal such as gold, platinum or chromium; an electrically conductive oxide such as ITO; or an optically transparent semiconductor is formed by a vacuum deposition method, in the area where an electrode is to be formed. As described above, the electrode may also be a bilayer electrode.

Next, carbon nanotubes are fixed to the glass substrate so as to be in contact with the working electrode. It is preferable that the area on the glass substrate where the carbon nanotubes are to be fixed, be hydrophilically treated. For example, it is preferable to bring an alkali aqueous solution into contact with the region on the glass substrate where the carbon nanotubes are to be fixed. A hydrophilic treatment makes it easy to fix carbon nanotubes to the glass substrate.

Carbon nanotubes are fixed to the area where the carbon nanotubes are to be fixed, by adding dropwise an aqueous dispersion liquid of carbon nanotubes. It is preferable that the carbon nanotubes be uniformly dispersed in the aqueous dispersion liquid of carbon nanotubes. The aqueous dispersion liquid of carbon nanotubes can be obtained by adding carbon nanotubes to an aqueous solution containing an acid and hydrogen peroxide. The acid is preferably an acid mixture of sulfuric acid and nitric acid. The ratio of sulfuric acid and nitric acid is not particularly limited, but may be such that the volume ratio of sulfuric acid:nitric acid = 3:1. There are no particular limitations on the amounts of the acid and hydrogen peroxide, but the amounts may be 4 mL of the acid and about 500 µL of an aqueous solution of hydrogen peroxide (concentration about 30%) relative to 0.5 mg of CNT.

The carbon nanotubes are preferably added to an aqueous solution containing an acid and hydrogen peroxide, and then subjected to an ultrasonic treatment. The duration of the ultrasonic treatment may be about 1 to 2 hours. If the ultrasonic treatment is carried out for an excessively long time, there is a risk that the carbon nanotubes may be fragmentized. After the ultrasonic treatment, the carbon nanotubes-containing aqueous solution is diluted with water and is neutralized by dialysis, and thereby, an aqueous dispersion liquid of carbon nanotubes is obtained.

The aqueous dispersion liquid of carbon nanotubes thus obtained is supplied in small amounts to a predetermined area on the glass substrate, and thereby the carbon nanotubes are fixed onto the glass substrate.

As described above, the reference electrode and the counter electrode may not be fixed onto the insulating substrate, and preferably, the electrodes are disposed to be demountable from the insulating substrate.

### 2. Measurement of peroxide

A peroxide (particularly, a peroxide in a solution) can be measured by using the CNT sensor of the present invention. Measurement of a peroxide means both a quantitative measurement and a qualitative measurement. In order to measure a peroxide, first, a solution containing the peroxide is supplied onto the carbon nanotubes fixed to the insulating substrate. The supplied solution is brought into contact with the counter electrode and the reference electrode.

The working electrode is set up by means of the reference electrode. Subsequently, a potential difference is provided between the working electrode and the counter electrode. The current value, Id, that flows between the working electrode and the counter electrode is measured. Usually, the current value, Id, increases as the concentration of the peroxide contained in the sample increases.

If a calibration curve representing the relations between the concentration of the peroxide and the current value, Id, is determined in advance, the peroxide concentration in the sample can be rapidly determined.

The measurement method of the present invention can measure various peroxides, for example, peroxides of proteins, nucleic acids and lipids present in the living body. As described above, as a conventional technique for measuring a biological component, a spectroscopic method using a peroxidase reaction is well known. In the conventional spectroscopic methods, biological components have been indirectly measured by measuring the hydrogen peroxide generated by enzymatic reactions. On the contrary, the measurement method of the present invention can directly measure the peroxide of an organic compound (for example, a lipid peroxide) in a solution sample, even without generating hydrogen peroxide as in the conventional measurement methods.

Lipid peroxides are expected as promising oxidative biomarkers in clinical tests. For example, lipid peroxides may serve as indicators for various diseases such as lifestyle-related diseases (for example, arteriosclerosis, diabetes, Alzheimer's disease, hemodialysis complications, and ageing). Lipid peroxides can be broadly classified into free fatty acid hydroperoxides (FA-OOH); triglyceride hydroperoxides (TG-OOH); cholesterol ester hydroperoxides (CE-OOH) such as cholesterol linolate hydroperoxide; phospholipid hydroperoxides (PL-OOH) such as hydroperoxides of glycerolphospholipids and hydroperoxides of sphingophospholipids; cholesterol hydroperoxides; glycolipid hydroperoxides; and the like, and the measurement method of the present invention can directly measure any of the lipid peroxides.

Some of the lipid peroxides have already been chemically synthesized. The inventors of the present invention have also reported chemical syntheses of cholesterol ester hydroperoxides, phosphatidylcholine hydroperoxides which are one class of phospholipids, triglyceride hydroperoxides, and the like (Hui SP, et al., Analytical Sciences, Vol.16, No.10, pp.1023-1028.; Hui SP, et al., Journal of Chromatography B, Vol.857, pp.158-163.; Hui SP, et al., Lipids, Vol.38, No.12, pp.1287-1292). When these chemically synthesized peroxides are used, and the relations between the concentration of the peroxides and the current values, Id, of the CNT sensor are plotted as calibration curves, the peroxide concentration can be determined from the current value, Id, in a sample analysis.

As described above, the measurement of lipid peroxides contributes to the diagnosis, treatment, development of therapeutic drugs and the like for various diseases such as lifestyle-related diseases.

Of course, the measurement method of the present invention can measure the concentration of hydrogen peroxide in a solution sample. As described above, as a conventional technique for measuring biological components, a spectroscopic method using a peroxidase reaction is well known. In this method, hydrogen peroxide is generated by causing a biological component to react using an enzyme specific to the biological component, a pigment is made to develop a color by an oxidation reaction which involves hydrogen peroxide and uses a peroxidase as a catalyst, and absorption by this pigment is measured by a spectroscopic method. A representative example thereof may be the measurement of a cholesterol ester as shown below.

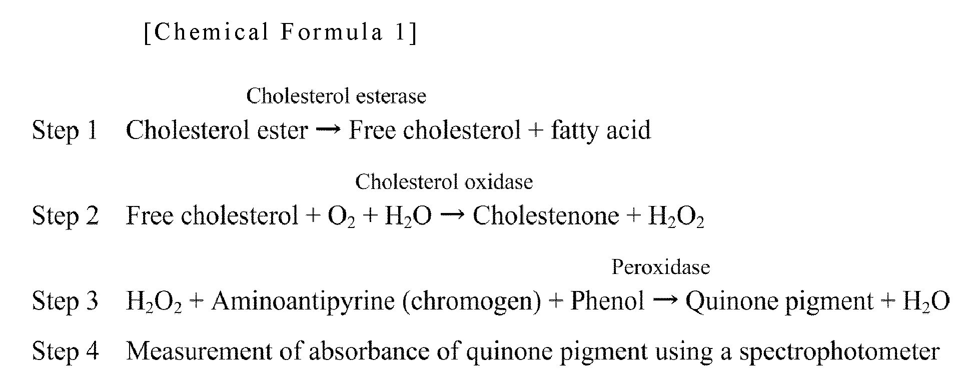

When the measurement method of the present invention is used, the hydrogen peroxide generated in Step 2 (hydrogen peroxide generated by the specific enzymatic reaction of a biological component) can be measured. The measurement method of the present invention can measure even a low concentration of hydrogen peroxide with high sensitivity, and even if various biological components are present in mixture in a solution sample, appropriate measurement can be realized. For example, as shown in the Examples that will be described below, even if ascorbic acid, bilirubin, uric acid, human serum albumin and the like are present in mixture, their influence on the measurement of hydrogen peroxide is negligible. Furthermore, if a filtration-treated serum is used, the influence of the serum on the measurement of hydrogen peroxide will be sufficiently reduced as well. As such, a new technique for measuring a biological component, which will replace the spectroscopic method using a peroxidase reaction as described above, is provided by the measurement method of the present invention.

According to the measurement method of the present invention, various biological components can be measured through the measurement of hydrogen peroxide. Examples of the biological components include glucose, total cholesterol, free cholesterol, triglycerides, phospholipids, LDL-cholesterol, HDL cholesterol, free fatty acids, uric acid, creatinine, bilirubin, lactic acid, pyruvic acid, and cholines. Furthermore, the biological components may also be enzymes. Examples of the enzymes include those enzymes which involve a hydrogen peroxide production reaction in the enzyme activity measurement system, such as cholinesterases, amylases, and lipases.

According to the measurement method of the present invention, in addition to the biological components, trace components that are measured by an immunological measurement system involving a hydrogen peroxide production reaction, can also be measured. Examples of such trace components include hormones, tumor markers, cytokines, as well as exogenous substances such as drugs.

### EXAMPLES

### 1. Production of CNT sensor

### (1) Preparation of substrate

On a glass substrate (20 mm × 20 mm), the area other than the region intended for electrode formation was masked with a resist film using a lithographic method. Films of titanium and gold were formed in the region intended for electrode formation according to a vacuum deposition method, and thus an electrode having a bilayer structure was formed. Subsequently, the resist film was removed.

Meanwhile, 1 mL of a 30% aqueous solution of hydrogen peroxide was added in small amounts to 3 mL of sulfuric acid, and thus a sulfuric acid/hydrogen peroxide liquid mixture was prepared. The glass substrate having an electrode formed thereon was placed in a 20-mL beaker, and while the glass substrate was ice-cooled together with the beaker, the sulfuric acid/hydrogen peroxide liquid mixture was added dropwise. While the mixture was lightly stirred, the system was incubated for 10 minutes at room temperature. After 10 minutes, the glass substrate was washed with deionized water, and was subsequently washed with pure ethanol.

The washed glass substrate was placed in a 50-mL Falcon tube, with the surface (electrode-formed surface) facing upward. This Falcon tube was placed on a heater which had been warmed at 80°C. At this time, the Falcon tube was inclined using aluminum foil. The lid of a 1.5-mL microtube was cut off with scissors, and dichlorosilane was poured into the depressed portion of the lid. The lid holding dichlorosilane was transferred into the 50-mL Falcon tube, the lid of the Falcon tube was lightly closed, and the system was left to stand for one minute. The glass substrate was removed from the 50-mL Falcon tube, and the glass substrate was placed directly on the heater and was left to stand for 30 minutes at 80°C. Thereafter, the glass substrate was washed with deionized water.

4 µL of 2 N sodium hydroxide was supplied to the region on the surface of the glass substrate where carbon nanotubes were to be mounted, and the region of the glass substrate was allowed to react for 10 minutes so as to be hydrophilically treated. Thereafter, the glass substrate was washed with deionized water.

### (2) Acid treatment of single-walled carbon nanotubes

0.5 mg of single-walled carbon nanotubes (SWCNT; Carbon Nanotechnologies, Inc.) was washed with an acid mixture of sulfuric acid and nitric acid (all by Kanto Chemical Co., Inc.). The washed SWCNT were suspended in a liquid mixture of 1.8 mL of sulfuric acid, 0.6 mL of nitric acid and 0.2 mL of aqueous hydrogen peroxide (Kanto Chemical Co., Inc.), and the suspension was ultrasonically treated for one hour. The resulting black SWCNT dispersion liquid was diluted with water, and was dialyzed until a neutral pH value was obtained, and thus a 1 mg/mL aqueous dispersion liquid of SWCNT was obtained.

### (3) Mounting of single-walled carbon nanotubes

The SWCNT in the aqueous dispersion liquid of SWCNT were dispersed by ultrasonically treating the dispersion liquid for 10 minutes in a bath type ultrasonicator. The glass substrate was placed on a heater that had been previously warmed at 80°C, and 4 µL each of the SWCNT dispersion liquid (1 mg/mL) was superposed for 5 times, to a total amount of 20 µL, in the gap between the electrodes. Subsequently, the glass substrate was left to stand for 2 hours at 150°C in order to be stabilized.

### 2. Measurement of hydrogen peroxide

### (1) Electrochemical measurement

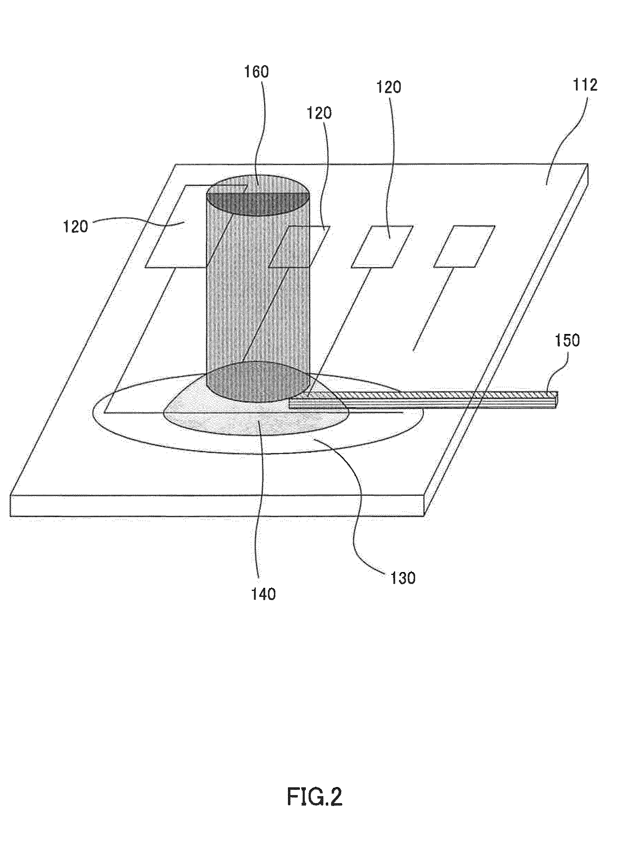

A 30% aqueous solution of hydrogen peroxide was diluted with 1×PBS (pH 7.4) to prepare aqueous solutions of hydrogen peroxide (samples) at 3 µM, 30 µM, 300 µM, 3 mM and 30 mM. The CNT sensor was disposed on a prober, and the glass substrate was fixed with a vacuum pump. The working electrode and the counter electrode were respectively connected with an electrode probe. Furthermore, a counter electrode and a reference electrode were disposed such that the gap between the electrodes and the glass substrate would be approximately 2 mm (see FIG.2).

20 µL of 1×PBS was supplied to the gap between the SWCNT-mounted section and the reference electrode on the glass substrate (see FIG.2). A voltage of -50 mV was applied between the working electrode and the counter electrode, and the current value, Id, was measured continuously for 2 minutes. The measured current values obtained for 20 to 30 seconds were averaged, and the average value was designated as the measured current value of 1×PBS (reference value).

After 1×PBS was removed, each of the samples (aqueous solutions of hydrogen peroxide at various concentrations) was supplied between the SWCNT-mounted section and the reference electrode, and the current value, Id, was measured continuously for 2 minutes. The samples were supplied in an order of increasing concentration. The measured current values obtained for 20 to 30 seconds were respectively averaged, and the average values were designated as the measured current values of the aqueous solutions of hydrogen peroxide at various concentrations.

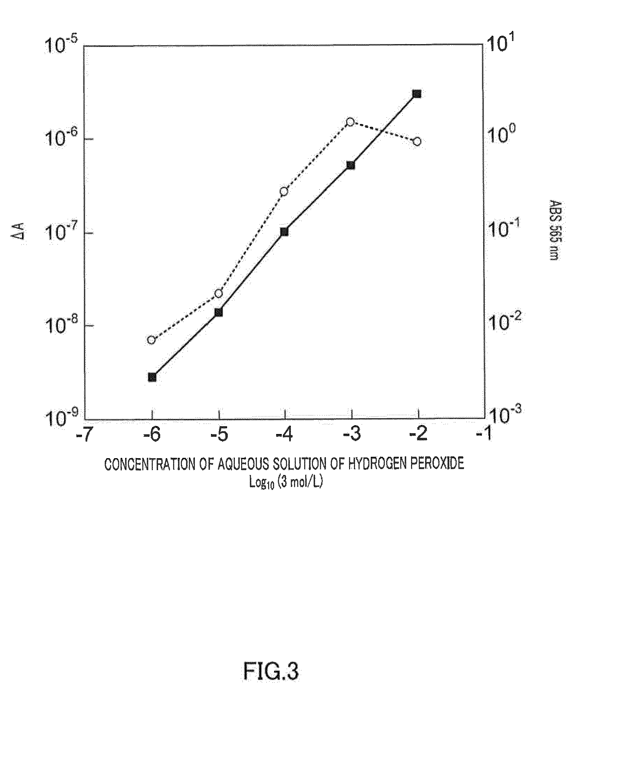

A calibration curve was produced by plotting the hydrogen peroxide concentration (logarithmic scale) on the horizontal axis, and plotting the difference (logarithmic scale) between the measured current value of each of the aqueous solutions of hydrogen peroxide at various concentrations and the measured current value of 1×PBS (reference value) on the vertical axis (see FIG.3; closed square, solid line).

### (2) Spectroscopic measurement (control experiment)

The preparation of samples was carried out as described below. 20 µL of an aqueous solution of hydrogen peroxide at a concentration of 10 times the final concentration, 20 µL of 10×PBS (pH 7.4), 20 µL of 15 mM 4-aminoantipyrine, 20 µL of 0.4% dimethylaniline, 20 µL of 400 mM dimethyl glutarate, and 99 µL of deionized water were mixed. The concentrations of hydrogen peroxide used were 3 µM, 30 µM, 300 µM, 3 mM, and 30 mM. 1 µL of 5 U/µL of a peroxidase (POD) was added to the liquid mixture, and the resulting mixture was incubated for 10 minutes at 37°C in a water bath. After 10 minutes, the absorbance (565 nm) of the reaction liquid was measured.

A calibration curve was produced by plotting the concentration of hydrogen peroxide (logarithmic scale) on the horizontal axis, and plotting the absorbance of the reaction liquid (logarithmic scale) on the vertical axis (see FIG.3; open circle, broken line).

### (3) Measurement results

As shown in FIG.3, a calibration curve that was linear in the concentration range of 3 µM to 30 mM was obtained in the electrochemical measurement (closed square, solid line); however, a calibration curve that was linear in the concentration range of 3 µM to 3 mM was obtained in the spectroscopic measurement (open circle, broken line). The measurable concentration range in the electrochemical measurement was broader by an order of magnitude on the higher concentration side, as compared with the spectroscopic measurement. Furthermore, in the electrochemical measurement, the duration of measurement per sample was as short as 30 seconds. On the other hand, in the spectroscopic measurement, the samples required incubation for 10 minutes. It can be seen that the electrochemical measurement is more useful than the spectroscopic measurement, even from the viewpoint of shortening of the measurement time.

### 3. Investigation on effect of inhibitory substances on measurement of hydrogen peroxide

### (1) Investigation on effects of ascorbic acid, bilirubin, uric acid and human serum albumin

As samples, a 3 mM aqueous solution of hydrogen peroxide, and mixtures obtained by adding one of measurement inhibitory substances (ascorbic acid, bilirubin, uric acid or human serum albumin) to a 3 mM aqueous solution of hydrogen peroxide, were prepared. The concentrations of ascorbic acid and bilirubin used were 0.5 µM, 5 µM, 50 µM, and 500 µM. The concentrations of uric acid used were 30 µM, 300 µM, and 3 mM. The concentrations of human serum albumin used were 0.05 mM, 0.5 mM, 2 mM, and 5 mM. The solvent for the respective samples was 1×PBS.

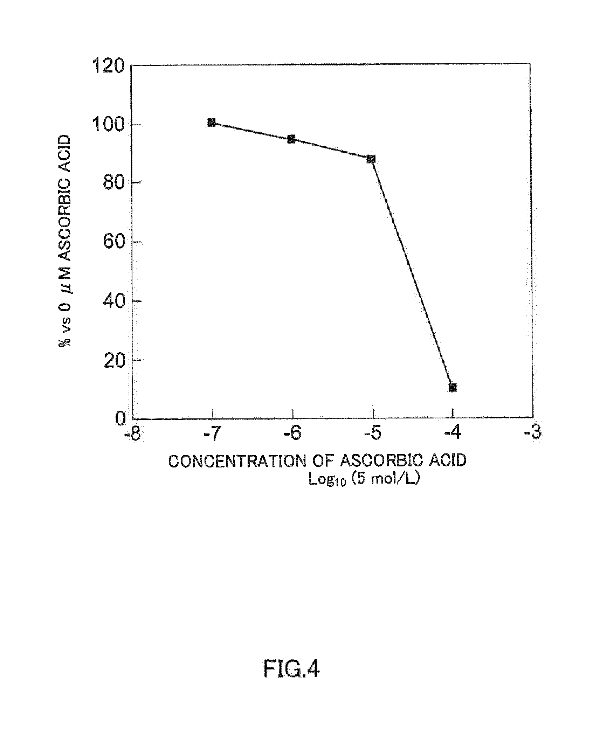

Hydrogen peroxide in each of the samples was measured by the same procedure as that used in the electrochemical measurement using the CNT sensor as described above. While the measured current value of the 3 mM aqueous solution of hydrogen peroxide (no measurement inhibitory substance) was taken as 100%, the relative values of the measured current values of the various samples were plotted on the vertical axis (see FIG.4 to FIG.7).

### (2) Investigation on effect of human serum

In regard to the human serum, the blood of a normal person (a 24-year-old man) in a fasting state was collected in a 10-mL plain blood collection tube, was left to stand for one hour at room temperature, and then was subjected to a centrifugation operation for 10 minutes at 3500 rpm to thereby separate the serum. 500 µL of the serum was filtration-treated with a filter (Amicon) having a molecular weight cut-off of 100,000, and a liquid that had passed through the filter was collected. The centrifugation operation was carried out for 10 minutes at 8000 rpm.

As samples, a 3 mM aqueous solution of hydrogen peroxide, and mixtures obtained by adding human serum (serum that had not been filtration-treated, or serum that had been filtration-treated) to a 3 mM aqueous solution of hydrogen peroxide, were prepared. The final concentrations of human serum used were a 1000 times dilution, a 100 times dilution, and a 10 times dilution. The solvent for the various samples was 1×PBS.

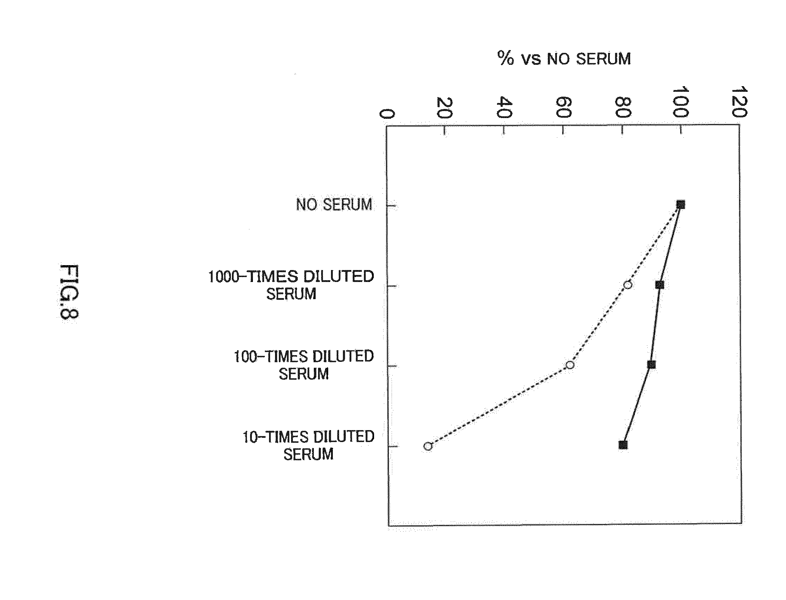

Hydrogen peroxide in each of the samples was measured by the same procedure as that used in the electrochemical measurement using the CNT sensor as described above. While the measured current value of the 3 mM aqueous solution of hydrogen peroxide (no serum) was taken as 100%, the relative values of the measured current values of the various samples were plotted on the vertical axis (see FIG.8).

### (3) Measurement results

FIG.4 is a graph showing the results of measuring hydrogen peroxide in the presence of ascorbic acid. The reference range of ascorbic acid in the living body is 3 to 10 µM. It can be seen from these results that the effect of ascorbic acid in the serum of a normal person on the measurement is approximately less than 10%.

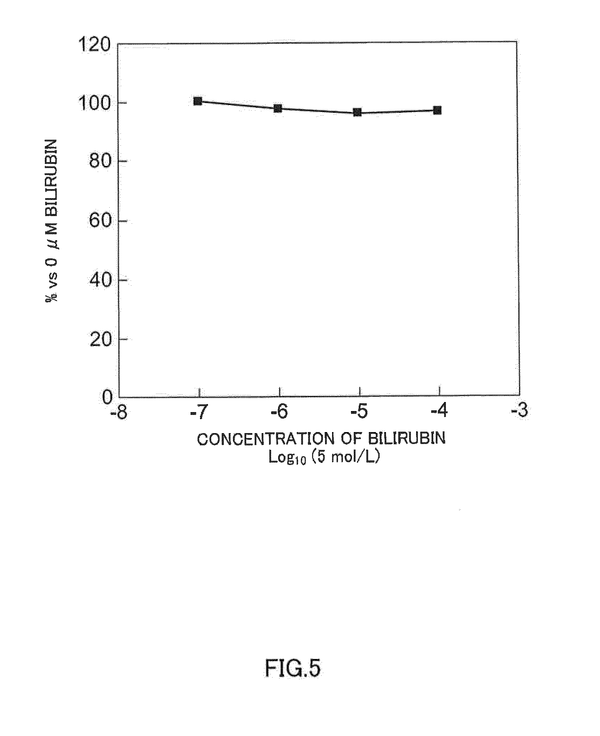

FIG.5 is a graph showing the results of measuring hydrogen peroxide in the presence of bilirubin. The reference range of bilirubin in the living body is 4 to 24 µM. It can be seen from these results that the effect of bilirubin in the serum of a normal person on the measurement is approximately less than 5%.

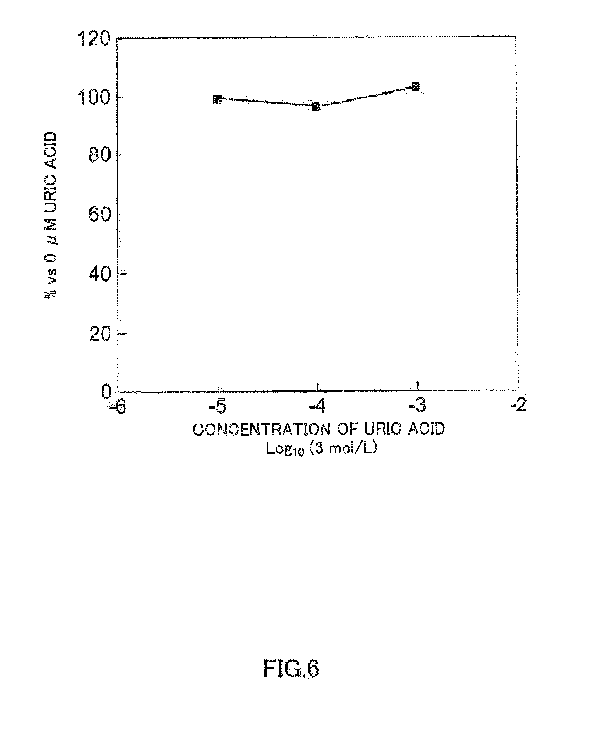

FIG.6 is a graph showing the results of measuring hydrogen peroxide in the presence of uric acid. The reference range of uric acid in the living body is 150 to 420 µM. It can be seen from these results that the effect of uric acid in the serum of a normal person on the measurement is approximately less than 5%.

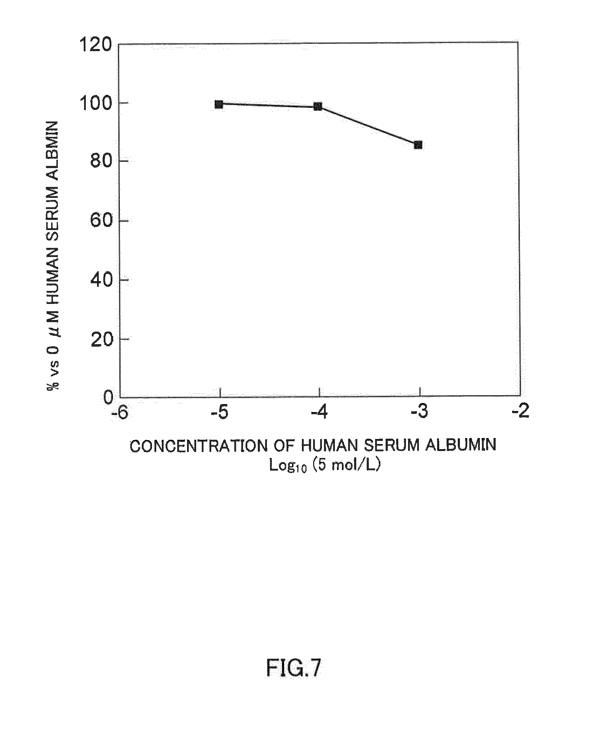

FIG.7 is a graph showing the results of measuring hydrogen peroxide in the presence of human serum albumin. The reference range of human serum albumin in the living body is 0.59 to 0.74 µM. It can be seen from these results that the effect of human serum albumin in the serum of a normal person on the measurement is approximately less than 10%.

FIG.8 is a graph showing the results of measuring hydrogen peroxide in the presence of human serum. The presence of serum that had not been filtration-treated caused serious inhibition on the measurement (open circle, broken line). On the other hand, when the serum was filtration-treated, inhibition on the measurement could be reduced (closed square, solid line). Since the serum was filtration-treated using a filter having a molecular weight cut-off of 100,000, it can be speculated that macromolecules having a molecular weight of larger than 100,000 (for example, lipoproteins, globulin proteins, and some albumin proteins that had not been eliminated) caused inhibition on the measurement.

### 4. Measurement of lactic acid

An aqueous solution of lactic acid was diluted with 1×PBS (pH 7.4), and aqueous solutions of lactic acid (samples) at 1 µM, 10 µM, 100 µM, 1 mM, and 10 mM were prepared. Lactic acid in each of the samples was measured by the same procedure as that used in the electrochemical measurement using the CNT sensor as described above.

Specifically, 20 µL of a blank sample (19 µL of 1×PBS, and 1 µL of lactate oxidase (LOD, 5 mU/µL)) that had been previously incubated for 2 minutes at 37°C in a water bath was supplied between the SWCNT-mounted section and the reference electrode on the glass substrate. A voltage was applied between the working electrode and the counter electrode, and the current value, Id, was measured continuously for 2 minutes. The measured current values obtained for 20 to 30 seconds were averaged, and the average value was designated as the measured current value of the blank sample (reference value).

After the blank sample was removed, 20 µL of a sample (19 µL of an aqueous solution of lactic acid at each concentration, and 1 µL of LOD (5 mU/µL)) that had been previously incubated for 2 minutes at 37°C in a water bath was supplied between the SWCNT-mounted section and the reference electrode, and the current value, Id, was measured continuously for 2 minutes. The samples were supplied in an order of increasing concentration. The measured current values obtained for 20 to 30 seconds were respectively averaged, and the average values were designated as the measured current values of the aqueous solutions of lactic acid at various concentrations.

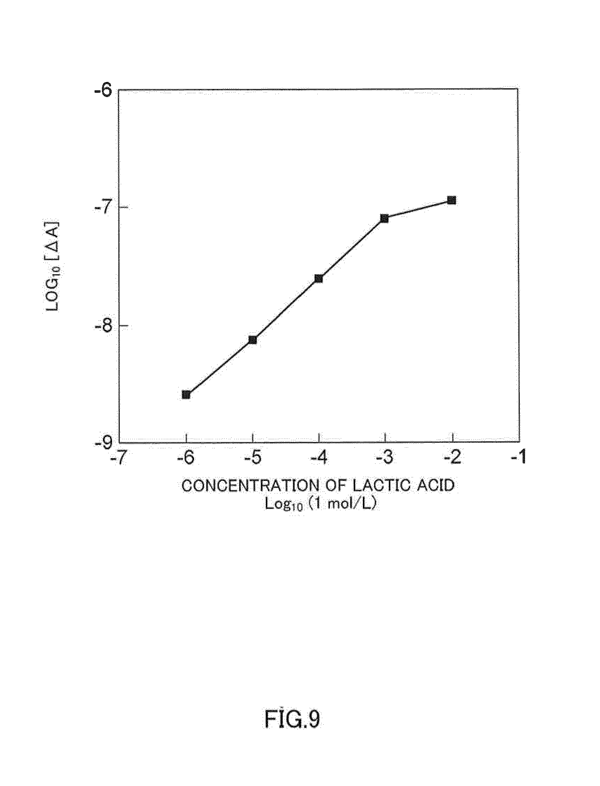

A calibration curve was produced by plotting the lactic acid concentration (logarithmic scale) on the horizontal axis, and plotting the difference (logarithmic scale) between the measured current value of each of the aqueous solutions of lactic acid (including LOD) at various concentrations and the measured value of 1×PBS (including LOD) (reference value) on the vertical axis (see FIG.9).

As shown in FIG.9, a satisfactory calibration curve in the range of 0.001 mM to 1.0 mM was obtained. The concentration of lactic acid in human serum is several mM. Therefore, as it is considered that a serum sample is measured after diluting 10 times or diluting 100 times, it can be said that the measurement range of the electrochemical measurement using a CNT sensor is satisfactory.

5. Measurement of hydroperoxide of cholesteryl ester (cholesteryl linolate) 3.2 mg of cholesteryl linolate was dissolved in 10 mL of 100% methanol, and a 50 µM cholesteryl linolate solution was prepared. The cholesteryl linolate solution was diluted with 100% methanol to prepare 200 µL each of cholesteryl linolate solutions at 50 nM, 500 nM, and 5 µM, respectively. 180 µL of 1×PBS was added to 20 µL of each of the cholesteryl linolate solutions to dilute the solution 10 times, and samples were prepared such that the final concentration of methanol reached 10% (the final concentration of the cholesteryl ester would be 5 nM to 5 µM). At the same time, a sample obtained by adding 20 µL of 100% methanol to 180 µL of 1×PBS was prepared as negative control.

Subsequently, the hydroperoxide of cholesteryl linolate was prepared. First, a cholesteryl ester was prepared from cholesterol and linoleic acid. Subsequently, a peroxidation reaction involving singlet oxygen was carried out under light irradiation using hematoporphyrin as a photosensitizer. The structure of the hydroperoxide thus produced was determined by utilizing various analysis methods such as an NMR method, an HPLC method, and a mass spectrometry method. The details of the production procedure for the hydroperoxide are described in a prior art document (Hui SP, et al., Analytical Sciences, Vol.16, No.10, pp.1023-1028).

The solution of the cholesteryl linolate hydroperoxide was diluted with 100% methanol to prepare cholesteryl linolate hydroperoxide solutions at 50 nM, 500 nM, 5 µM, and 50 µM. 180 µL of 1×PBS was added to 20 µL of each of the cholesteryl linolate hydroperoxide solutions to dilute the solution 10 times, and samples were prepared such that the final concentration of methanol reached 10% (the final concentration of the cholesteryl ester hydroperoxide would be 5 nM to 5 µM). At the same time, a sample obtained by adding 20 µL of 100% methanol to 180 µL of 1×PBS was prepared as negative control.

Cholesteryl linolate or cholesteryl linolate hydroperoxide of the various samples was measured by the same procedure as that used in the electrochemical measurement using the CNT sensor as described above.

Specifically, 20 µL of the sample of negative control was supplied between the SWCNT-mounted section and the reference electrode on the glass substrate. A voltage of -300 mV was applied between the working electrode and the counter electrode, and the current value, Id, was measured continuously for 2 minutes. The measured current values obtained for 60 to 120 seconds were averaged, and the average value was designated as the measured current value of the sample of negative control (reference value).

After the sample of negative control was removed, 20 µL of each of the samples (cholesteryl linolate solutions or cholesteryl linolate hydroperoxide solutions) was supplied between the SWCNT-mounted section and the reference electrode, and the current value, Id, was measured continuously for 2 minutes. The samples were supplied in an order of increasing concentration. The measured current values obtained for 60 to 120 seconds were respectively averaged, and the average values were designated as the measured current values of the cholesteryl linolate solutions or cholesteryl linolate hydroperoxide solutions at various concentrations.

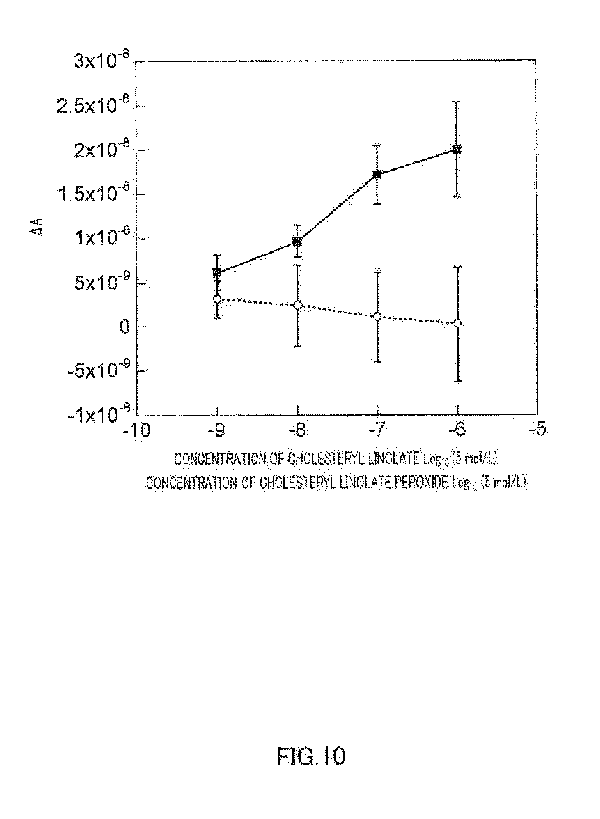

A graph was produced by plotting the concentration of the cholesteryl ester or cholesteryl ester hydroperoxide (logarithmic scale) on the horizontal axis, and plotting the difference (logarithmic scale) between the measured current value of the sample of each concentration and the measured current value of the sample of negative control (reference value) on the vertical axis (see FIG.10).

As shown in FIG.10, in the solution sample containing cholesteryl linolate hydroperoxide, a concentration-dependent increase in the signal was observed (closed square, solid line). On the other hand, in the solution sample containing (non-peroxide) cholesteryl linolate, a concentrate-dependent change in the signal was not observed (open circle, broken line). From these results, it is suggested that the peroxide structure "-OOH", that is, hydroperoxide, was read as the signal.

From the above results, it is speculated that the measurement is not limited to cholesteryl ester hydroperoxides, but various lipid peroxides can be similarly measured.

### 6. Measurement of oxidized LDL (response to current)

Low density lipoprotein (LDL) was separated by a conventional method (ultracentrifugation method) from a serum collected from a normal person. LDL thus obtained and copper sulfate were diluted and mixed in 2 mL of 1×PBS such that their final concentrations were 83 µg/mL and 0.553 µM, respectively, and the mixture was incubated at room temperature to oxidize LDL. The time point at which LDL and copper sulfate were mixed was designated as 0 minute, and the oxidized LDL (conjugated diene form) produced over time was measured by the following three kinds of methods.

### 1) Conjugated diene method

The absorbance (234 nm) of the mixture liquid was measured 1 minute, 3 minutes, and 5 to 180 minutes (at an interval of 5 minutes) after the mixing.

### 2) TBARS method

The mixture liquid was collected in an amount of 25 µL each after 10 minutes, 30 minutes, 60 minutes, 120 minutes, and 180 minutes after the mixing. 1 mL of a 5.3 mg/mL thiobarbituric acid (TBA)-sodium acetate solution was added to each of the mixture liquid (25 µL), and the mixtures were allowed to react for one hour at 100°C. After the reaction, the absorbance (535 nm) of the reaction liquid was measured.

### 3) Method of invention

The mixture liquid was collected in an amount of 20 µL each after 1 minute, 3 minutes, and 5 to 180 minutes (at an interval of 5 minutes) after the mixing. Each mixture liquid (25 µL) was supplied between the SWCNT-mounted section and the reference electrode of the CNT sensor described above. A voltage was applied such that the potential of the working electrode with respect to the reference electrode would be -300 mV, and the current value, Id, was measured continuously for 2 minutes.

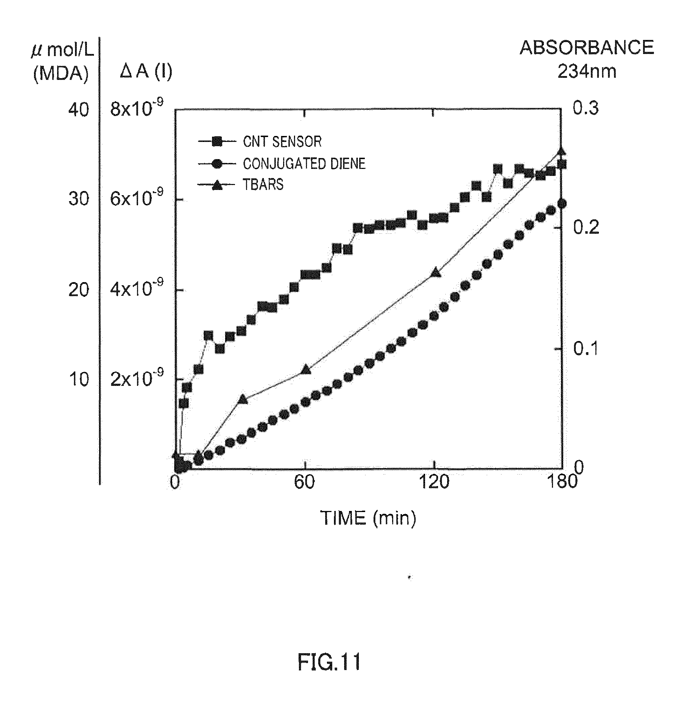

The measurement results of the conjugated diene method (closed circle), the TBARS method (closed triangle), and the method of the present invention (closed square) are presented in FIG. 11. The horizontal axis of FIG. 11 represents the time elapsed after the mixing, and the vertical axis represents the absorbance (234 nm) measured by the conjugated diene method, the amount of current change measured by the method of the present invention, and the amount of thiobarbituric acid-reactive substance (TBARS) in terms of malondialdehyde (MDA) measured by the TBARS method.

As shown in FIG.11, increases in the signal over time were observed in all of the conjugated diene method, the TBARS method and the method of the present invention. Especially, in the method of the present invention using a CNT sensor, changes in the signal were clearly recognized from the beginning of the reaction, so that peroxidation of lipids could be detected in the early stage. As a control experiment, when an LDL solution diluted with 1×PBS without adding copper sulfate, and 1×PBS containing copper sulfate only were respectively used as the object of measurement, increases in the current value were not observed.

From the above results, it can be seen that the method of the present invention can examine the oxidation state of lipids with higher sensitivity and for a shorter time, as compared with the conjugated diene method and the TBARS method.

### 7. Measurement of oxidized LDL (response to potential change)

LDL was separated by a conventional method (ultracentrifugation method) from the serum collected from a normal person. LDL thus obtained and copper sulfate were diluted and mixed in 0.2 mL of 1×PBS such that their final concentrations were 83 µg/mL and 0.553 µM, respectively, and the mixture was incubated at 37°C to oxidize LDL. While the time point at which LDL and copper sulfate were mixed was designated as 0 minute, the oxidized LDL (conjugated diene form) produced over time was measured by the conjugated diene method described above, but an increase in the absorbance was practically not observed 3 hours after the mixing. This sample that had been stood for 3 hours after the mixing was used as an oxidized LDL solution. Furthermore, a sample prepared by adding 1×PBS instead of copper sulfate was used as a pre-oxidized LDL solution.

20 µL of a buffer solution was supplied between the SWCNT-mounted section and the reference electrode of the CNT sensor described above, and then the potential of the working electrode with respect to the reference electrode was measured over time. After the signal was almost stabilized, a portion (10 µL) of the buffer solution was soaked up. Subsequently, 10 µL of the oxidized LDL solution or the pre-oxidized LDL solution was supplied to the gap between the SWCNT-mounted section and the reference electrode, and then the potential of the working electrode with respect to the reference electrode was measured over time.

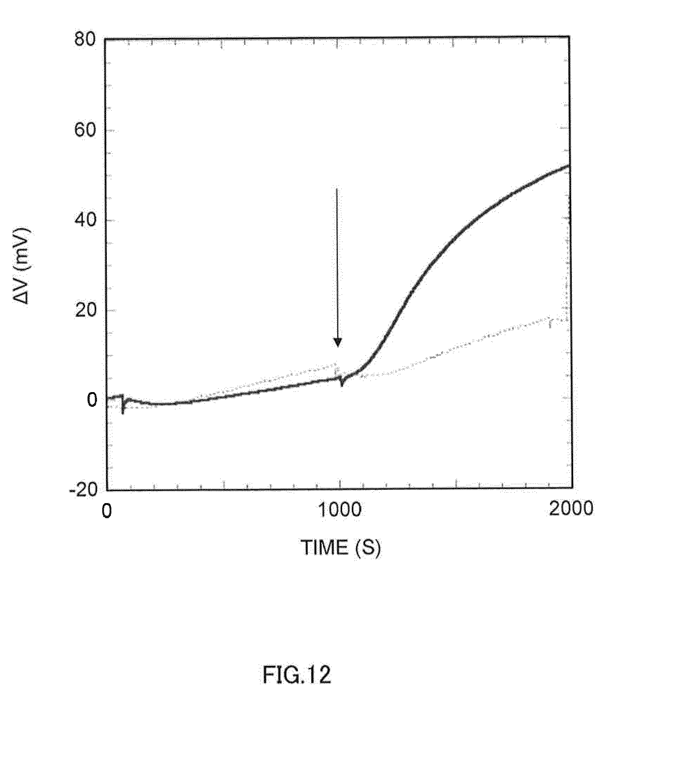

The results of measuring the potential change of the working electrode with respect to the reference electrode after the oxidized LDL solution (solid line) or the pre-oxidized LDL solution (broken line) was supplied, are presented in FIG.12. The horizontal axis of FIG.12 represents the time elapsed, and the vertical axis represents the change in the potential of the working electrode with respect to the reference electrode. Furthermore, the arrow at the center of the graph represents the time point at which the oxidized LDL solution or the pre-oxidized LDL solution was supplied.

As shown in FIG.12, in the time period between 0 and 1000 seconds before the oxidized LDL solution or the pre-oxidized LDL solution was supplied, a drift (right upward) of the baseline was observed. When the oxidized LDL solution was supplied, a potential change of about 30 mV was observed. On the other hand, when the pre-oxidized LDL solution was supplied, a potential change of only 5 mV or less was observed, and distinction of the change from the drift was difficult. Furthermore, when a solution containing pre-oxidized HDL was supplied, and when a solution containing copper sulfate only was supplied, no change in the potential was observed.

From the results described above, it can be seen that the CNT sensor responds to oxidized LDL.

The present patent application claims priority based on Japanese Patent Application No. 2009-169126 filed on July 17, 2009. The disclosures described in the specification and the attached drawings are all incorporated in the specification of the present application by reference.

### Industrial Applicability

CNT sensors are advantageous in that a reaction can be detected as an electrical signal without using a light source or a detector, and that mass production is enabled. Therefore, it is not excessive to say that the measurement method of the present invention using a CNT sensor can bring an innovation to clinical tests.

First, a CNT sensor can be utilized as a platform of tests carried out outside an examination room (POCT, SMBG, and OTC). In the measurement method of the present invention, since the operation is markedly simplified and the measurement time is also short, as compared with the chemiluminescence-HPLC method that has been hitherto used in laboratories for the measurement of lipid peroxides, POCT of lipid peroxides that have been difficult up to now to be used as the objects for POCT, is also enabled.

Furthermore, if an apparatus which continuously collects blood is connected to a CNT sensor, or if a tissue is connected to a CNT sensor by inserting a needle into the interstitial fluid, the effect of training of athletes can be monitored in real time, and it is also possible to transmit data from a small-sized signal-transmitting device that is attached to the wrist or the waist, to personal computers. Such an apparatus can also be applied to home medical care or to the monitoring of patients in health care facilities for the elderly.

In addition, CNT sensors can also bring dramatic changes to clinical examination rooms. Those biochemical analysis apparatuses that are currently used in hospital examination rooms are large in size and expensive, and require maintenance such as washing of cuvettes and tubes. Even in the biochemical analysis apparatuses, curtailment of cost and space is strictly demanded, and small-sized apparatuses which require less amounts of use of reagents are employed with preference. However, downsizing of the current spectroscopic analysis apparatuses has reached its limits.

When a CNT sensor chip that is small-sized, inexpensive and disposable is utilized, the analysis apparatuses can be miniaturized to a level that is not realizable in the current state. Further, apparatuses which require a use amount of reagents that is reduced to one-tenth of the currently required amount of use, and which do not require maintenance, can be developed. Such apparatuses enable real-time examination of various items at various sites such as clinics, operating rooms, emergency rooms, ambulances, examination cars, health care facilities for the elderly, and one-coin checkup facilities in the street.

Furthermore, it is also possible to utilize CNT sensors in the screening of antioxidant foods and antioxidant drugs. For example, when a system which allows a certain oxidation reaction to be carried out using a CNT sensor is produced, a plant extract or a drug may be added thereto, and the antioxidant activity can be easily measured. When the advantage of portability of CNT sensors is utilized, screening of natural antioxidant substances is enabled in any environment over the world (for example, in the jungle or the mountain), and large contribution can be made to the food industry and pharmaceutical industry.

### Reference Signs List

110 Insulating substrate
112 Glass substrate
120 Working electrode
130 Carbon nanotubes
140 Sample solution
150 Counter electrode
160 Reference electrode

## Claims

1. A method for measuring a peroxide in a sample, the method comprising the steps of:
preparing a CNT sensor including a working electrode disposed on an insulating substrate, single-walled carbon nanotubes that are in contact with the working electrode and have a hydroxyl group or a carboxyl group on the surface, a counter electrode, and a reference electrode;
supplying a sample which is a solution containing the peroxide, to the CNT sensor so as to be brought into contact with the single-walled carbon nanotubes; and
providing a potential difference between the working electrode and the counter electrode.

2. The method according to claim 1, wherein the single-walled carbon nanotubes are carbon nanotubes that have been treated by being dispersed in a solution containing an acid and hydrogen peroxide.

3. The method according to claim 1, wherein the peroxide is hydrogen peroxide that has been generated by allowing a biological component to react using an enzyme specific to the biological component.

4. The method according to claim 3, wherein the biological component is selected from the group consisting of glucose, total cholesterol, free cholesterol, triglycerides, phospholipids, LDL cholesterol, HDL cholesterol, free fatty acids, uric acid, bilirubin, lactic acid, pyruvic acid, creatinine, cholines, and enzymes.

5. The method according to claim 1, wherein the peroxide is a lipid peroxide.

6. The method according to claim 5, wherein the lipid peroxide is a cholesterol ester peroxide, a cholesterol peroxide, a phospholipid peroxide, a triglyceride peroxide, or a glycolipid peroxide.

7. A sensor for peroxide measurement, comprising a working electrode disposed on an insulating substrate, single-walled carbon nanotubes that are in contact with the working electrode and have a hydroxyl group or a carboxyl group on the surface, a counter electrode, and a reference electrode,
wherein a sample solution containing the peroxide to be measured is supplied so as to be brought into contact with the single-walled carbon nanotubes.

8. The sensor for peroxide measurement according to claim 7, wherein the single-walled carbon nanotubes are carbon nanotubes that have been treated by being dispersed in a solution containing an
acid and hydrogen peroxide.
